# EUROPÄISCHE PATENTANMELDUNG

(11) **EP 0 999 154 A1**
(43) Veröffentlichungstag der Anmeldung: **10.05.2000**
(21) Anmeldenummer: 99121141.8
(22) Anmeldetag: 22.10.1999
(51) Int. Cl.: B65G 49/04, B62D 65/00

(54) **Pendelförderer**

(30) Priorität: 23.10.1998 DE 19848946
(71) Anmelder: EISENMANN MASCHINENBAU KG, 71002 Böblingen (DE)
(72) Erfinder: Kleist, Reinhard, 71085 Holzgerlingen (DE)
(74) Vertreter: Ostertag, Ulrich

(57) **Zusammenfassung**

Ein Pendelförderer (1) umfaßt in an und für sich bekannter Weise zwei parallel zum Bewegungsweg der zu fördernden Gegenstände (2) angeordnete Tragschienen (12), an denen eine Vielzahl von Pendelgehängen (5) verschwenkbar aufgehängt ist. Die Pendelgehänge (5) sind an ihren oberen Enden über Tragbolzen (10) mit Tragrollen (11) verbunden, die auf den Tragschienen (12) abrollen. Förderketten (13) erstrecken sich beidseits des Bewegungsweges der Gegenstände (2) parallel zu den Tragschienen (12) und stehen in Mitnahmeverbindung mit den Tragbolzen (10) der Pendelgehänge (5). Der Raum, in dem sich die Pendelgehänge (5) und die Gegenstände (2) befinden, ist durch Trennwände (17) gegen äußere Räume abgedichtet, in denen sich die Fördertechnikkomponenten, insbesondere also die Förderketten (13), die Tragrollen (11), die Tragschienen (12) und gegebenenfalls Umlenkmittel (26) für die Transportkette (13) befinden. Auf diese Weise wird verhindert, daß die Fördertechnikkomponenten aggressiven Dämpfen von Bädern (3) ausgesetzt sind, durch welche die Gegenstände (2) hindurchgeführt werden, und daß umgekehrt von den Fördertechnikkomponenten Schmierfett in diese Bäder (3) abtropfen kann.

## Beschreibung

Die Erfindung betrifft einen Pendelförderer zur hängenden Beförderung von Gegenständen mit
a) beidseits des Bewegungsweges der Gegenstände verlaufenden Tragschienen;
b) einer Mehrzahl von verschwenkbar an den Tragschienen aufgehängten Pendelgehängen, welche die Gegenstände tragen und die jeweils zwei vertikale Streben aufweisen, die an ihrem oberen Ende über einen Tragbolzen mit einer auf der jeweiligen Tragschiene abrollenden Tragrolle verbunden sind;
c) beidseits des Bewegungsweges der Gegenstände parallel zu den Tragschienen verlaufenden Förderketten, die in Mitnahmeverbindung mit den Tragbolzen der Pendelgestänge stehen.

Pendelförderer dieser Art werden zu sehr verschiedenen Zwecken eingesetzt. Sehr häufig werden sie dort verwendet, wo die Gegenstände zu ihrer Behandlung durch verschiedene Bäder hindurchgeführt werden müssen. Ein Beispiel hierfür sind Lackieranlagen in der Automobilindustrie, in denen Autokarosserien verschiedene Bäder durchlaufen. Die Karosserien werden hierzu von den Pendelförderern über Gefällstrecken der Tragschienen in die Bäder abgesenkt und nach Durchlaufen der Bäder über entsprechende Steigungsstrecken wieder aus den Bädern herausgehoben.

Die der Förderung dienenden Komponenten des Pendelförderers, nachfolgend "Fördertechnikkomponenten" genannt, befinden sich beim Stande der Technik oberhalb der Bäder und innerhalb des Raumes, in den die Bäder abdampfen. Dort herrscht daher in vielen Fällen eine aggressive Umgebung, welche zu einer Korrosion der Fördertechnikkomponenten führen kann. Umgekehrt kann von den Fördertechnikkomponenten, insbesondere den Transportketten und deren Umlenkrädern, Fett, das zur Schmierung erforderlich ist, in die Bäder abtropfen und auf diese Weise den Badinhalt schädigen.

Aufgabe der vorliegenden Erfindung ist es, einen Pendelförderer der eingangs genannten Art so auszugestalten, daß weder von der Umgebung, durch welche die Gegenstände hindurchgeführt werden, auf die Fördertechnikkomponenten noch in umgekehrter Richtung von den Fördertechnikkomponenten auf die Umgebung, durch welche die Gegenstände hindurchbefördert werden, ein schädlicher Einfluß ausgeübt werden kann.

Diese Aufgabe wird erfindungsgemäß dadurch gelöst, daß
d) beidseits des Bewegungsweges der Gegenstände eine Trennwand vorgesehen ist, welche den inneren Raum, in welchem sich die Pendelgehänge und die Gegenstände befinden, gegen einen äußeren Raum abdichten, in dem sich die jeweilige Tragschiene, die Tragrolle und die Transportkette befinden,
e) jede Trennwand einen parallel zu den Tragschienen laufenden Spalt aufweist, durch welchen sich die jeweiligen Tragbolzen der Pendelgehänge hindurcherstrecken.

Erfindungsgemäß wird also der (innere) Raum, in dem sich die zu transportierenden Gegenstände bewegen, durch Trennwände von denjenigen (äußeren) Räumen getrennt, in denen sich die Fördertechnikkomponenten befinden. Auf diese Weise werden einerseits die Fördertechnikkomponenten gegen die aggressive Atmosphäre abgeschirmt, die sich in dem inneren Raum auf Grund der an den Gegenständen eingesetzten Substanzen einstellen kann. Andererseits wird verhindert, daß Schmiermittel von den Fördertechnikkomponenten in den inneren Raum gelangen können, wodurch die Substanzen, denen die Gegenstände ausgesetzt sind, verunreinigt werden könnten. Die Verbindung zwischen den äüßeren Räumen und dem zwischen diesen liegenden inneren Raum wird auf das Notwendigste begrenzt, nämlich einen schmalen Spalt, durch den sich die Tragbolzen der Pendelgehänge hindurcherstrecken und in dem sie sich vorwärts bewegen können.

Wie bereits erwähnt, sind bei Pendelförderern der hier interessierenden Art häufig Höhenunterschiede zwischen unterschiedlichen Bereichen der Tragschienen anzutreffen. Damit die Förderketten diesen Höhenunterschieden folgen können, müssen entsprechende Umlenkmittel vorgesehen sein. In diesem Falle sollten sich auch die Umlenkmittel in den äußeren Räumen befinden.

Besonders bevorzugt wird diejenige Ausgestaltung der Erfindung, bei welcher die Spalte in den Trennwänden durch eine Spaltabdeckung verschlossen sind, die sich nur an den momentanen Orten der Tragbolzen zu deren Durchlaß öffnen. Auf diese Weise erzielen die Trennwände tatsächlich eine weitgehend hermetische Abdichtung des inneren Raumes, der von den Trennwänden eingeschlossen ist, gegen die äußeren Räume, in denen sich die Fördertechnikkomponenten befinden. Der Spalt gibt nämlich auf diese Weise praktisch keinen Durchströmungsquerschnitt von innen nach außen oder von außen nach innen frei: In den Bereichen zwischen den Tragbolzen aufeinanderfolgender Pendelgehänge ist die Spaltabdeckung geschlossen. Dort, wo Tragbolzen den Spalt durchdringen, nehmen diese im wesentlichen den Durchströmungsquerschnitt ein.

Die Ausgestaltung kann dabei so sein, daß die Spaltabdeckungen aus einer Mehrzahl von Segmenten bestehen, die von den Tragbolzen beim Durchgang in eine Offenstellung bewegt werden und nach der Passage der Tragbolzen wieder in ihre Schließstellung zurückkehren. Diese Segmente werden also passiv durch die sich in Bewegungsrichtung der Gegenstände bewegenden Tragbolzen geöffnet und bedürfen keiner Steuerung oder keines gesonderten Antriebes.

Dies kann beispielsweise so geschehen, daß die Segmente um eine außerhalb ihres Schwerpunktes liegende Achse verschwenkbar sind. Trifft ein sich bewegender Tragbolzen auf die vordere Kante eines derartigen Segmentes, wird dieses um die Achse nach oben verschwenkt und gibt für den Tragbolzen ein Stück des Spaltes zum Durchgang frei. Hat der Tragbolzen dieses Stück des Spaltes durchwandert, fällt das Segment durch eine gegenläufige Schwenkbewegung unter dem Einfluß der Schwerkraft wieder in seine Schließstellung zurück.

Die Abdichtwirkung der aus Einzelsegmenten bestehenden Spaltabdeckung läßt sich dadurch noch verbessern, daß sich die Segmente in Bewegungsrichtung der Gegenstände überlappen.

Auf Grund von Verschmutzungen in den äußeren Räumen, welche die Fördertechnikkomponenten enthalten, wäre es grundsätzlich denkbar, daß die Rückkehr der Segmente der Spaltabdeckungen unter dem Einfluß der Schwerkraft alleine nicht mehr stattfindet. Um gleichwohl zu verhindern, daß in einem solchen Falle bestimmte Bereiche des Spaltes durchströmt werden können, läßt sich eine Ausgestaltung der Erfindung einsetzen, bei der die Segmente eine Rampenfläche aufweisen, die mit sich mit der Förderkette mitbewegenden Nocken zusammenwirkt, wobei die Rampenfläche gegen die Bewegungsrichtung der Nocken so verläuft, daß das Segment nach der Passage von jedem Tragbolzen wieder zwangsweise in die Schließstellung zurückgeführt wird. Auf diese Weise stehen genügend Kräfte zur Verfügung, um auch bei Verschmutzungen das jeweilige Segment nach der Passage des Tragbolzens aus der Offenstellung in die Schließstellung zurückzubringen.

Die Gefahr, daß agressive Dämpfe zu den Fördertechnikkomponenten gelangen, läßt sich weiter noch dadurch reduzieren, daß die äußeren Räume mit unter Überdruck stehendem Gas, insbesondere mit Luft, beaufschlagbar sind. Es findet dann allenfalls ein Ausströmen der Luft durch Undichtigkeiten aus den äußeren Räumen aber kein Eindringen von Medien in diese Räume statt.

Ein Ausführungsbeispiel der Erfindung wird nachfolgend anhand der Zeichnung näher erläutert; es zeigen
- Figur 1: schematisch die Seitenansicht eines Pendelförderers nach dem Stande der Technik im Einsatz in einer Karosserie-Lackieranlage;
- Figur 2: einen Vertikalschnitt durch einen erfindungsgemäßen Pendelförderer senkrecht zur Bewegungsrichtung, entsprechend etwa der Linie II - II von Figur 1;
- Figur 3: eine Detailvergrößerung aus Figur 2 im Bereich eines Umlenkrades der Förderkette;
- Figur 4: eine Detailvergrößerung aus Figur 2 im Bereich einer Tragschiene;
- Figur 5: die Seitenansicht einer Spaltabdichtung, wie sie bei den Pendelförderern nach den Figuren 2 bis 4 eingesetzt wird;
- Figur 6: die Stirnseitenansicht eines Einzelsegmentes der Spaltabdichtung von Figur 5;
- Figur 7: die Draufsicht auf die Spaltabdichtung von Figur 5.

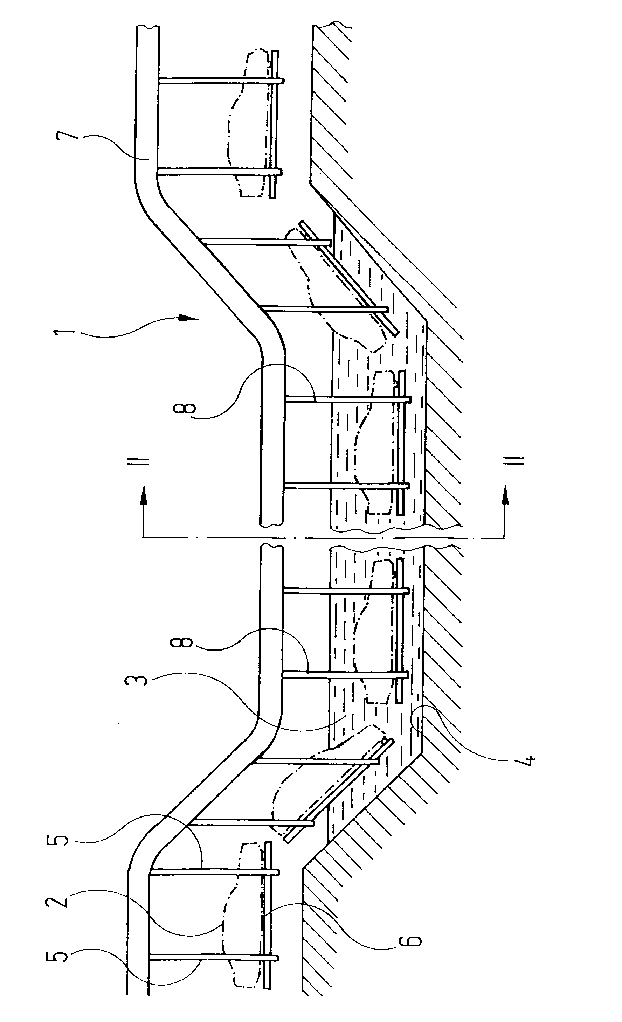

Figur 1 zeigt sehr schematisch im vertikalen Schnitt parallel zur Bewegungsrichtung, wie ein Pendelförderer, der insgesamt das Bezugszeichen 1 trägt, in einer Station einer Karosserie-Lackieranlage eingesetzt wird. Der Pendelförderer 1 führt die zu lackierenden, in Figur 1 gestrichelt dargestellten Karosserien 2 der Reihe nach durch mehrere Bäder 3, die sich in wannenartigen Vertiefungen 4 befinden. In Figur 1 ist nur ein derartiges Bad 3 mit der zugehöringen wannenartigen Vertiefung 4 dargestellt; weitere derartige Bäder 3 und wannenartige Vertiefungen 4 sind vor und hinter dem in der Zeichnung dargestellten Ausschnitt zu denken.

Die zu lackierenden Karosserien 2 werden von dem Pendelförderer 1 in das Bad 3 abgesenkt und nach dem Durchlaufen des Bades 3 wieder aus diesem herausgehoben. Hierzu weist der Pendelförderer 1 Gefällstrecken und Steigungsstrecken auf, über die horizontale Abschnitte unterschiedlicher Höhe über Grund miteinander verbunden sind.

Der Pendelförderer 1 umfaßt für jede zu lackierende Karosserie 2 zwei U-förmige Pendelgehänge 5, die an ihrem unteren Ende gelenkig mit einer Trageplattform 6 verbunden sind, auf welcher die Karosserie 2 ruht. Die oberen Enden der vertikalen Streben 8 der Pendelgehänge 5 sind gelenkig mit einer im allgemeinen als Tragbolzen ausgebildeten horizontalen Achse verbunden, auf welcher eine Tragrolle befestigt ist. Die Tragrolle rollt auf einer Tragschiene ab und wird mit Hilfe einer Transportkette, die sich parallel zur Tragschiene erstreckt, in Förderrichtung gezogen. Die erwähnten Fördertechnikkomponenten, also die Tragbolzen, die Tragrollen und die zugehörigen Tragschienen sowie die Förderkette sind in Figur 1 durch eine Abdeckung 7 verdeckt.

Der oben beschriebene und soweit bekannte Aufbau von Pendelförderern 1 hat folgenden Nachteil:

Die hinter der Abdeckung 7 versteckten Fördertechnikkomponenten, insbesondere die Förderketten sowie die Umlenkräder für die Förderketten zu Beginn und am Ende von Gefäll- und Steigungsstrecken, müssen geschmiert werden. Bei den bekannten Förderschnecken 1 sind nun diese Fördertechnikkomponenten unmittelbar über den Bädern 3 verlegt, so daß sie einerseits aggressiven Dämpfen, die von den Bädern 3 ausgehen können, ausgesetzt sind und daß andererseits Fett von den Fördertechnikkomponenten in die Bäder 3 herabtropfen und diese dadurch verderben kann.

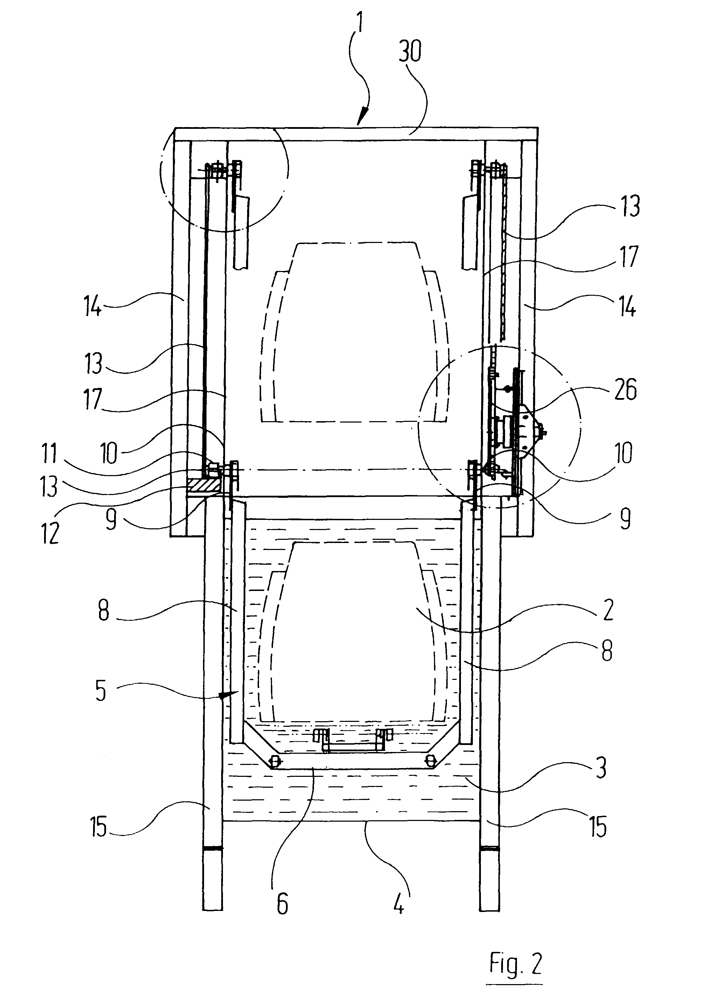

Bei einem erfindungsgemäßen Pendelförderer 1, wie er in den Figuren 2 bis 7 dargestellt ist, werden daher beidseits die Fördertechnikkomponenten in seitlicher Richtung aus dem Bereich der Wannen ausgelagert und zusätzlich gegen den Bereich der Wannen durch Trennwände abgeschirmt. Dies ist insbesondere der Figur 2 zu entnehmen, die einen Pendelförderer 1 im Vertikalschnitt senkrecht zur Bewegungsrichtung zeigt. Die Blickrichtung entspricht dabei in etwa der Linie II - II von Figur 1.

Im unteren Bereich der Figur 2 ist eine Wanne 4 zu erkennen, die ein Bad 3 enthält. In das Bad 3 ist eine zu lackierende Karosserie 2 eingetaucht. Diese ruht in konventioneller Weise auf einer Tragplattform 6, die gelenkig mit zwei Pendelgehängen 5 verbunden ist. In der Zeichnung ist nur ein derartiges Pendelgehänge 5 erkennbar.

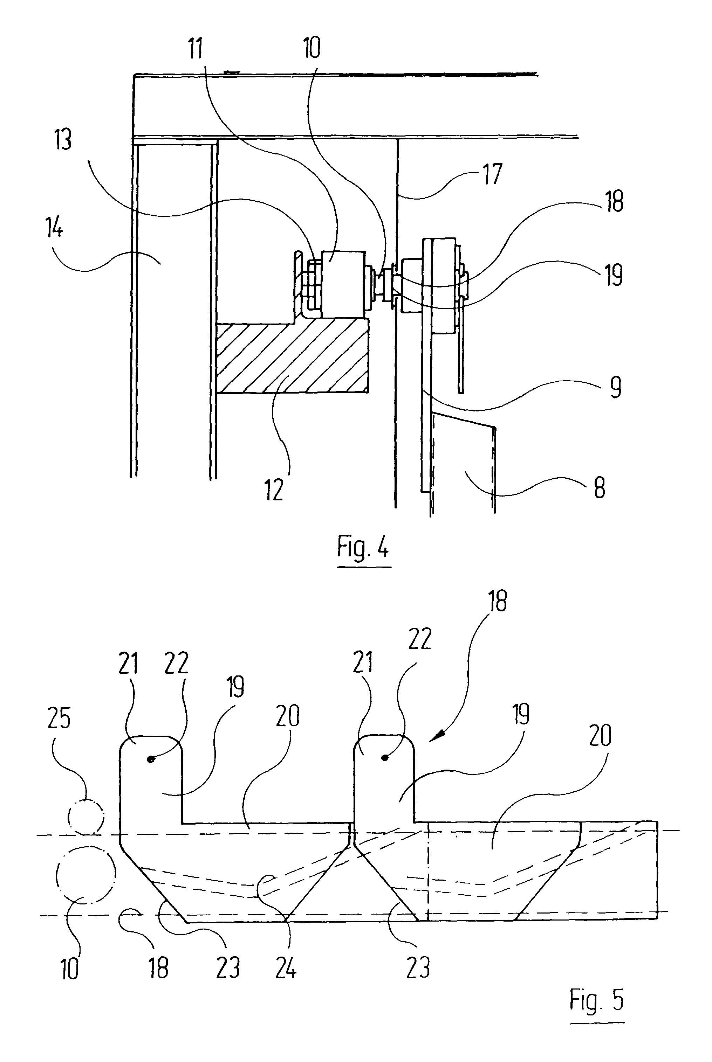

Jedes Pendelgehänge 5 umfaßt zwei vertikale Streben 8 auf gegenüberliegenden Seiten der Karosserie 2, die an ihrem oberen Ende über Verbindungsbleche 9 jeweils mit horizontalen als Achse dienenden Tragbolzen 10 verbunden sind. Wie insbesondere die Detailvergrößerung von Figur 4 zeigt, ist auf jedem Tragbolzen 10 eine Tragrolle 11 gelagert, die auf der Oberseite einer Tragschiene 12 abrollt. Das äußere, über die Tragrolle 11 überstehende Ende des Tragbolzens 10 ist greift in eine Förderkette 13 ein.

Die Tragschiene 12 ist an vertikalen Stahlbauträgern 14 befestigt, die entlang des Bewegungsweges des Pendelförderers 1 in geeigneten Abständen aufgerichtet sind. Die Zwischenräume zwischen den Stahlbauträgern 14 sind durch in der Zeichnung nicht erkennbare Bleche verschlossen. Am oberen Ende sind die gegenüberliegenden Stahlbauträger 14 durch eine Dachkonstruktion 30 miteinander verbunden. Der Abstand gegenüberliegender Stahlbauträger 14 ist, wie Figur 2 zu entnehmen ist, größer als die Breite der Wanne 4 und auch größer als der Abstand der unteren Stahlbauträger 15, an denen die Wanne 4 montiert ist.

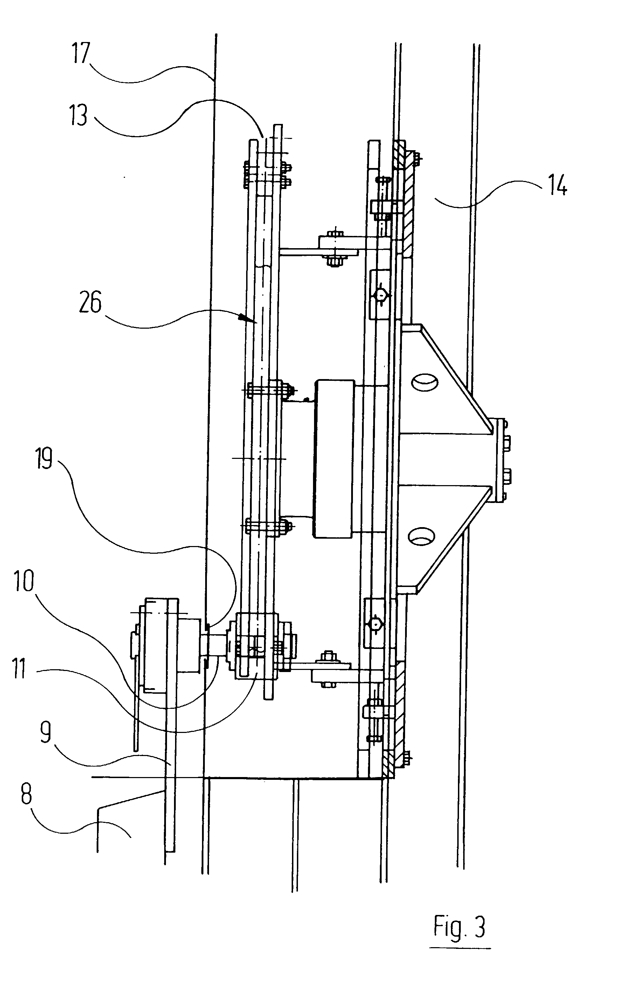

Fluchtend zu den Seitenwänden 16 der Wanne 4 sind auf gegenüberliegenden Seiten des Pendelförderers 1 parallel zu den oberen Stahlbauträgern 14 Trennwände 17 montiert, die sich nach oben bis zur Dachkostruktion 30 erstrecken. Die oben im einzelnen erwähnten Fördertechnikkomponenten, d.h. insbesondere die Tragrollen 11, die Förderschienen 12 sowie die Transportkette 13, befinden sich in den Räumen seitlich außerhalb der Trennwände 17 und innerhalb der Stahlbauträger 14 sowie der diese verbindenden Bleche. Diese Räume werden im Betrieb mit Frischluft beaufschlagt, die unter einem gewissen Überdruck steht. Die Tragbolzen 11 durchsetzen einen Spalt 18 in den Trennwänden 17 (vgl. insbesondere die Figuren 2 und 3), der parallel zu den Tragschienen 12 verläuft.

Der Spalt 18 ist an allen Stellen, an denen er nicht von einem Tragbolzen 11 durchsetzt wird, durch eine Abdeckung verschlossen. Diese ist näher in Figur 5 gezeigt. In dieser sind der Spalt 18 in der Trennwand 17 sowie im Schnitt der Tragbolzen 10, der diesen Spalt 18 durchsetzt, erkennbar. Die Abdeckung setzt sich aus einzelnen Schwenksegmenten 19 zusammen, welche jeweils einen Hauptabschnitt 20 aufweisen, an den außermittig eine Befestigungsfahne 21 angeformt ist. Die Schwenksegmente 19 sind jeweils über einen Schwenkzapfen 22, der im oberen Bereich der Befestigungsfahne 21 angeordnet ist, verschwenkbar an der Trennwand 17 angelenkt. Diese Anlenkung erfolgt offensichtlich außerhalb des Schwerpunkts der Schwenkelemente 19, derart, daß diese sich unter dem Einfluß der Schwerkraft in Figur 5 im Uhrzeigersinn um die Schwenkachsen 22 zu drehen suchen. Durch geeignete Anschläge, die in Figur 5 nicht dargestellt sind, wird Sorge dafür getragen, daß die Hauptabschnitte 20 der einzelnen Schwenksegmente 19 normalerweise parallel zum Schlitz 18 in der Trennwand 17 verlaufen und diesen auf diese Weise verschließen.

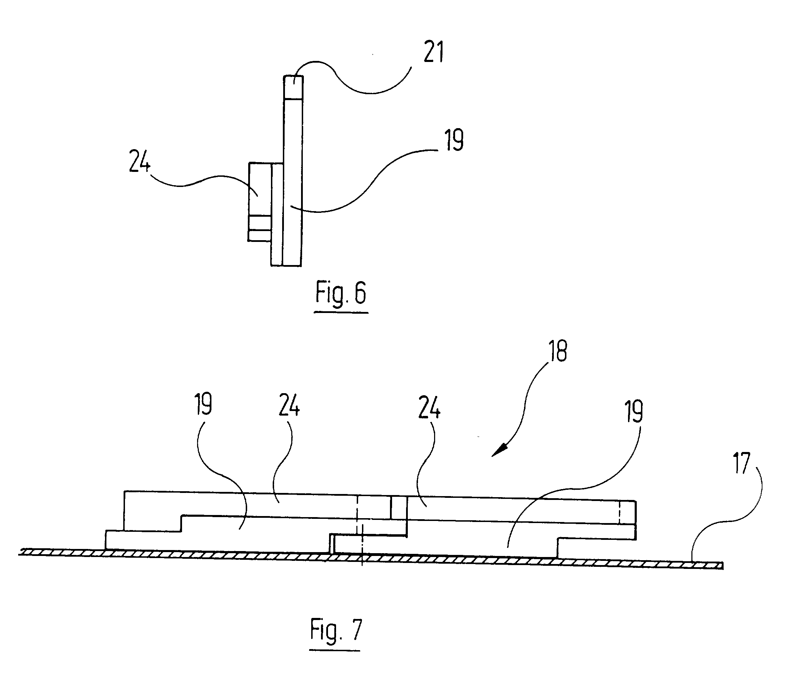

Benachbarte Schwenksegmente 19 überlappen einander. Wie insbesondere der Figur 7 zu entnehmen ist, sind zu diesem Zwecke beide seitlichen Enden der Schwenksegmente 19 in nur halber Wandstärke ausgeführt, derart, daß das Ende des einen Schwenksegmentes 19 neben dem Ende des benachbarten Schwenksegmentes plaziert werden kann. Die gegen die Bewegungsrichtung der Tragbolzen 10 gerichtete Kante 23 der Schwenksegmente 19 ist abgeschrägt (Figur 5), derart, daß beim Auflaufen eines Tragbolzens 10 auf diese Kante 23 das entsprechende Schwenksegment 19 in Figur 5 gegen den Uhrzeigersinn nach oben verschwenkt wird und dabei ein Stück des Spalts 18 für den weiteren Durchgang des Tragbolzens 11 freigibt. Diese Schwenkbewegung des in Figur 5 linken Schwenksegmentes 19 gegenüber dem in Figur 5 rechten Schwenkelement 19 wird trotz der Überlappung der benachbarten Schwenkelemente 19 dadurch möglich, daß die Übergangslinie, welche den in Figur 5 rechten, dünneren Endbereich der Schwenksegmente 19 von dem links hiervon befindlichen, normal dicken Bereich trennt, schräg verläuft.

Hat der Schwenkzapfen 11, der Bewegung der Transportkette 13 folgend, ein Schwenksegment 19 passiert, so fällt dieses normalerweise in seine ursprüngliche, den Spalt 18 verdeckende Position unter dem Einfluß der Schwerkraft zurück, während das in Bewegungsrichtung nächstfolgende Segment 19 durch den Tragbolzen 11 aufgedrückt wird.

Für den Fall, daß aus besonderen Gründen das Rückfallen des offenen Schwenksegmentes 19 unter dem bloßen Einfluß der Schwerkraft nicht erfolgt, beispielsweise weil die Drehbewegung des Schwenkelementes 19 durch Schmutz behindert ist, so ist für eine Zwangsrückstellung in folgender Weise Sorge getragen:

Jedes Schwenkelement 19 besitzt auf der der Transportkette 13 zugewandten Seite eine Rampenfläche 24. Diese verläuft in der Sicht der Figur 5 bezogen auf die Bewegungsrichtung der Tragbolzen 10 zunächst bis etwa zur Mitte des Schwenksegmentes 19 leicht nach unten, knickt dort nach oben ab und erstreckt sich von dort aus bis zum Ende des Schwenksegmentes 19 zur oberen Kante des Hauptabschnittes 20 des Schwenksegmentes 19. Diese Rampenfläche 24 arbeitet mit einem Nocken 25 zusammen, der in Figur 5 ebenfalls im Schnitt dargestellt ist und z.B. an der Transportkette 13 oder an einem anderen sich gemeinsam mit dem Tragbolzen 10 bewegenden Teil befestigt ist. Ist nun ein Schwenksegment 19 in der Offenstellung stehengeblieben, ohne unter dem Einfluß der Schwerkraft zurückzufallen, so trifft der Nokken 25 auf die in seinem Bewegungsweg befindliche Rampenfläche 24 des Schwenksegmentes 19 und drückt dieses durch Wechselwirkung mit der Rampenfläche 24 zwangsweise nach unten, bis dieses nach Passage des Nockens 25 wieder in der in Figur 5 dargestellten Schließposition ist.

Bei der beschriebenen Ausführungsform des erfindungsgemäßen Pendelförderers sind die der reinen Fördertechnik zuzurechnenden Komponenten, insbesondere die Tragschienen 12, die Transportketten 13 und eventuelle Umlenkmittel für die Transportketten in äußeren Räumen untergebracht, die durch die Trennwände 17 hermetisch von demjenigen inneren Raum getrennt sind, in dem bzw. unter dem sich ein Bad 3 befindet. Dies bedeutet, daß einerseits kein Fett von den Transportketten 13 und deren Umlenkmitteln nach unten in das entsprechende Bad 3 fallen kann und daß andererseits aggressive Dämpfe, die von den Bädern 3 aufsteigen, nicht zu den Transportketten 13 und Umlenkmitteln gelangen können. Dies wird durch die oben erwähnte Tatsache unterstützt, daß in diesen äußeren Räumen ein gewisser Überdruck herrscht. Alle zur Fördertechnik gehörenden Komponenten sind leicht von außen her zugänglich.

In Figur 2 sind zwei Varianten dargestellt, wie z.B. am Einlaß und am Auslaß eines Bades (vgl. Figur 1) eine Krümmung der Tragschienen 12 und der sie begleitenden Förderketten 13 nach unten bzw. oben erfolgen kann. In der links von der vertikalen Mittelebene dargestellten Hälfte ist eine Ausführungsform gezeigt, bei welcher die Umlenkung der Transportkette 13 um den entsprechenden Winkel mit Hilfe von nicht eigens dargestellten Führungsschienen erfolgt. In der rechts von der Mittelebene der Figur 2 dargestellten Hälfte dagegen ist eine Ausführungsform gezeigt, bei welcher die Umlenkung der Transportkette 13 mittels eines Umlenkrades 26 geschieht, welches an einem Stahlbauträger 14 verdrehbar gelagert ist. Einzelheiten dieser Variante sind in Figur 3 dargestellt, worauf Bezug genommen wird. Der Übersichtlichkeit halber ist in der rechten Hälfte der Figur 3 die Tragschiene weggelassen, die unterhalb der Tragrolle 11 zu denken ist und über einen gewissen Bogen parallel zum Umfang des Umlenkrades 26 verläuft.

## Patentansprüche

1. Pendelförderer zur hängenden Beförderung von Gegenständen mit
a) beidseits des Bewegungsweges der Gegenstände verlaufenden Tragschienen;
b) einer Mehrzahl von verschwenkbar an den Tragschienen aufgehängten Pendelgehängen, welche die Gegenstände tragen und die jeweils zwei vertikale Streben aufweisen, die an ihrem oberen Ende über einen Tragbolzen mit einer auf der jeweiligen Tragschiene abrollenden Tragrolle verbunden sind;
c) beidseits des Bewegungsweges der Gegenstände parallel zu den Tragschienen verlaufenden Förderketten, die in Mitnahmeverbindung mit den Tragbolzen der Pendelgehänge stehen,
dadurch gekennzeichnet, daß
d) beidseits des Bewegungsweges der Gegenstände (2) eine Trennwand (17) vorgesehen ist, welche den inneren Raum, in dem sich die Pendelgehänge (5) und die Gegenstände (2) befinden, gegen einen äußeren Raum abdichten, in dem sich die jeweilige Tragschiene (12), die Tragrollen (11) und die Förderkette (13) befinden;
wobei
e) jede Trennwand (17) einen parallel zu den Tragschienen (12) verlaufenden Spalt (18) aufweist, durch welchen sich die jeweiligen Tragbolzen (10) der Pendelgehänge (5) hindurcherstrecken.

2. Pendelförderer nach Anspruch 1, bei welchem die Tragschienen über Gefälle- oder Steigungsabschnitte zwischen horizontal verlaufenden Bereichen unterschiedlicher Höhe über Grund verlaufen und die Förderketten durch Umlenkmittel von den horizontal verlaufenden Bereichen auf die Gefälle- oder Steigungsabschnitte überführt werden,
dadurch gekennzeichnet, daß sich die Umlenkmittel (26) in den äußeren Räumen befinden.

3. Pendelförderer nach Anspruch 1 oder 2, dadurch gekennzeichnet, daß die Spalte (18) in den Trennwänden (17) durch eine Spaltabdeckung (19) verschlossen sind, die sich nur an den momentanen Orten der Tragbolzen (10) zu deren Durchlaß öffnen.

4. Pendelförderer nach Anspruch 3, dadurch gekennzeichnet, daß die Spaltabdeckungen (19) aus einer Mehrzahl von Segmenten bestehen, die von den Tragbolzen (10) bei deren Durchgang in eine Offenstellung bewegt werden und nach der Passage der Tragbolzen (10) wieder in ihre Schließstellung zurückkehren.

5. Pendelförderer nach Anspruch 4, dadurch gekennzeichnet, daß die Segmente (19) um eine außerhalb ihres Schwerpunktes liegende Achse (22) verschwenkbar sind.

6. Pendelförderer nach Anspruch 4 oder 5, dadurch gekennzeichnet, daß sich die Segmente (19) in Bewegungsrichtung der Gegenstände (2) überlappen.

7. Pendelförderer nach einem der Ansprüche 4 bis 6, dadurch gekennzeichnet, daß die Segmente (19) eine Rampenfläche (24) aufweisen, die mit sich mit den Förderketten (13) mitbewegenden Nocken (25) zusammenwirkt, wobei die Rampenfläche (24) gegen die Bewegungsrichtung der Nocken (25) so verläuft, daß das Segment (19) nach der Passage von jedem Tragbolzen (10) wieder zwangsweise in die Schließstellung zurückgeführt wird.

8. Pendelförderer nach einem der vorhergehenden Ansprüche, dadurch gekennzeichnet, daß die äußeren Räume mit unter Überdruck stehendem Gas, insbesondere mit Luft, beaufschlagbar sind.
